Europäisches Patentamt

European Patent Office

Office européen des brevets

Publication number: **0 300 594**

**A1**

# EUROPEAN PATENT APPLICATION

(21) Application number: 88304028.9

(51) Int. Cl.⁴ **H01F 7/02**

(22) Date of filing: 04.05.88

(30) Priority: 21.07.87 US 75927

(43) Date of publication of application:
25.01.89 Bulletin 89/04

(84) Designated Contracting States:
DE FR GB

(71) Applicant: **MAGNETIC PERIPHERALS INC.**
**8100-34th Avenue South**
**Minneapolis Minnesota 55440(US)**

(72) Inventor: **Nayar, Sham Sunder**
**4429 Slater Road**
**Eagan Minnesota 55122(US)**

(74) Representative: **Caro, William Egerton et al**
**J. MILLER & CO. Lincoln House 296-302 High**
**Holborn**
**London WC1V 7JH(GB)**

(54) **Magnet positioning apparatus.**

(57) Apparatus for positioning on the surface of a ferrous pole piece (20) in a predetermined spatial relationship, a pair of magnets (10) of the type having relatively powerful flux generation which, when the magnets are within a mutual attraction distance pulls them towards each other, each magnet having two pairs of exterior corners (11,12;13,14), each pair of corners defining a line (15.16) intersecting them, the two lines so defined being approximately parallel to each other with a predetermined spacing from each other, comprises a bed having on it a channel (50) formed of a pair of opposed and facing interior walls (54,55) and a floor (61) between the walls. The walls are spaced from each other a distance sufficiently close to each other to permit only a predetermined amount of rotation of a magnet (10) within the channel. Each magnet can slide with each pair of corners (11,12;13,14) adjacent to one interior wall, and a recess (62) is centrally located in the floor (61) to receive the pole piece (20) with the surface of the pole piece on which the magnets are to be positioned approximately flush with the floor. The recess (62) is oriented to position the pole piece to create the predetermined spatial relationship between each magnet and the pole piece as the magnets slide towards each other in the channel over the pole piece. A magnet pusher (42) is positioned at each end of the channel (50) for simultaneously sliding the magnets (10) placed at the ends of the channel towards each other until magnetic attraction is felt between them and pulls them towards each other. A stop (52) is located in the channel 50 above the recess (62) and at least partially closes the channel. In operation, by placing the magnets in the ends of the channel (50) and activating the pushers (42), the magnets are slid to within their mutual attraction distance and then, under the force of mutual attraction, slide further into contact with the stop (52) and the pole piece (20). By inter-action between the magnets and the stop and the channel walls, the magnets rotationally and translationally position themselves in the predetermined spatial relationship on the pole piece with the force of magnetic attraction between the magnets and the pole piece serving to maintain the magnets in the predetermined spatial relationship on the pole piece.

COMPRESSED AIR

*Fig. 4*

## MAGNET POSITIONING APPARATUS

This invention relates to magnetic positioning apparatus and in particular apparatus for positioning on a surface of a ferrous pole piece in a predetermined spatial relationship, a pair of magnets.

It is now usual that the small transducers on disk memory units employing rigid disks are carried by an arm which is rotatably mounted to a deck which holds a disk spindle itself. The arm is positioned by a powerful permanent magnet motor which rotates the arm to position the transducer on the disk at a desired radius. The motors are typically designed with extremely high torque so that actuation, i.e. movement from one radius to another, of the arm occurs as quickly as possible.

High torque requires high strength magnets. The magnets in current use are usually made from a boron rare earth metal (such as samarium or neodymium) alloy and have extremely high flux generating capability. When fully magnetised, they are so powerful that a normal person cannot manually restrain the magnets from forceably contacting a pole piece which mechanically supports them, or into each other, indeed with such force that the magnets themselves are shattered by the impact, causing pieces to fly dangerously around the area and damage the magnets beyond use. If a person is unlucky enough to get a finger, for example, between such a magnet and any ferrous object, serious injury is possible.

In one particular actuator motor design, a pair of such magnets are coated with a thermo-setting adhesive and then mounted in required, space-apart positions, on a common surface of a pole piece. The magnetic attraction between the magnets and the pole piece allows the magnet-pole piece assembly to be transported, without shifting of the magnets on the pole piece, to an oven for curing the adhesive to mechanically bond the magnets to the pole piece.

Two magnet pairs are used to define between them a flux carrying gap in which the coil of the actuator motor moves in response to current passing through it. The coil is attached to the transducer arm, and in this way the arm is rotated to place the transducers at a desired radius.

A serious problem, alluded to above, is how one attaches and properly positions the magnets on the pole pieces without risking injury or damaging the magnets. Once they have attached themselves to the pole piece, if they are not positioned properly, it is remarkably difficult to re-position them before curing the adhesive. Whilst re-positioning can be done manually, or even with a tool, when thousands of these assemblies are needed for a production run, it is simplest to assure that the magnets are attached accurately at the outset.

Apparatus according to the present invention for positioning magnets on a pole piece takes advantage of the fact that each of the magnets used in actuator design discussed above has two pairs of exterior corners, each pair of which defines a line intersecting them. The two lines so defined are approximately parallel to each other with a predetermined spacing from each other.

According to one aspect of the present invention there is provided an apparatus for positioning on a surface of a ferrous pole piece in a predetermined spatial relationship, a pair of magnets of the type having relatively powerful flux generation which, when the magnets are within a mutual attraction distance pulls them towards each other, each said magnet having two pairs of exterior corners, each pair of corners defining a line intersecting them, the two lines so defined being approximately parallel to each other with a predetermined spacing from each other, said apparatus being characterised by comprising: a bed having on it a channel formed of a pair of opposed and facing interior walls and a floor between the walls, said walls being spaced from each other a distance sufficiently close to each other to permit only a predetermined amount of rotation of a magnet within the channel in which each magnet can slide with each pair of corners adjacent one interior wall, and a recess centrally located in the floor and adapted to receive the pole piece with the surface of the pole piece on which the magnets are to be positioned approximately flush with the floor, said recess being oriented to position the pole piece to create the predetermined spatial relationship between each magnet and the pole piece as the magnets slide towards each other in the channel and over the pole piece; a magnet pusher at each end of the channel for simultaneously sliding magnets placed at the ends of the channel towards each other until magnetic attraction is felt between them and pulls them towards each other; and a stop located in the channel above the recess and at least partially closing the channel, the arrangement being such that, in operation, by placing the magnets in the ends of the channel and activating the pushers, the magnets are slid to within their mutual attraction distance and then, under the force of mutual attraction, slide further into contact with the stop and the pole piece and by inter action between the magnets and the stop and channel walls, the magnets rotationally and translationally position themselves in the predetermined spatial relationship on the pole piece with the force of magnetic attraction between the magnets and the pole piece serving to maintain the magnets in the predetermined spatial relationship on the pole piece.

Preferably the stop is formed of a non-magnetic material.

The stop may include a slot receiving a non-magnetic spacer when the spacer is located in a preselected position on the pole piece between the magnets.

Preferably the apparatus comprises a removable cover enclosing the channel opening at the top.

The apparatus may include a ferrous magnet keeper having a surface to which the magnet may be attached, and a rest position between one of the magnet pushers and the adjacent end of the channel, said rest, in operation, supporting the keeper with its magnet in aligned relation with both the channel and the pusher, whereby actuation of the pusher slides the magnet from the keeper into the channel.

Preferably the magnet keeper comprises a rectangular prism having a groove in it from a first face to an opposite second face and intersecting a third face itself intersecting both the first and second faces, said groove having a width slightly greater than the thickness of a magnet, the rest supporting the keeper with the groove in alignment with and between an end of the channel and the adjacent pusher.

The stop may protrude into the channel above and approximately centered on the recess for the pole piece, so that, in operation, the magnets when sliding towards each other under the force of mutual attraction will strike the end of the stop within the channel when approximately in their preferred position. The stop preferably is slidably mounted in the bed with an end which protrudes into the channel, said stop including a surface having a bevel facing generally towards an end of the channel, the stop further including a spring urging the stop into the channel, whereby the force of the magnet when striking the end of the stop will create a camming action on the stop forcing its end out of the channel.

The magnet pusher may include an anvil for contacting and transmitting the force for sliding the magnet, said anvil including a bevel contacting the magnet for angularly orienting the magnet into a preferred angular position as it slides into the channel.

The present invention seeks to provide an apparatus which allows an assembly comprising high strength magnets and a pole piece to be assembled without causing damage to the parts involved or to the operator, which allows such an assembly to be consistently assembled with the magnets correctly positioned on the pole piece, which allows untrained manufacturing personnel to assemble the magnet assembly, and which allows both magnets of such a dual magnet assembly to be simultaneously positioned on the pole piece, thereby speeding the assembly process.

The invention is illustrated, merely by way of example, in the accompanying drawings, in which:-

Figure 1 is a perspective view of a magnet of the type to be included in a magnet assembly for an actuator of a disk drive;

Figure 2 is a perspective view of a magnet assembly comprising two magnets as shown in Figure 1;

Figure 3, consisting of Figures 3a and 3b, is a perspective view of two keepers in which magnets of the type shown in Figure 1 are transported during manufacturing processes;

Figure 4 is a perspective view of an apparatus according to the present invention for positioning magnets shown in Figure 1 on a pole piece;

Figure 5 is a plan view of a bed of the apparatus of Figure 4 in which the positioning of the magnets on the pole piece occurs;

Figure 6 is a plan view of the bed shown in Figure 5 illustrating the approximate orientation of a magnet at several intermediate stages whilst it is moved to its proper position on the pole piece; and

Figure 7 is a plan view of a magnet stop shown in Figures 4 to 6.

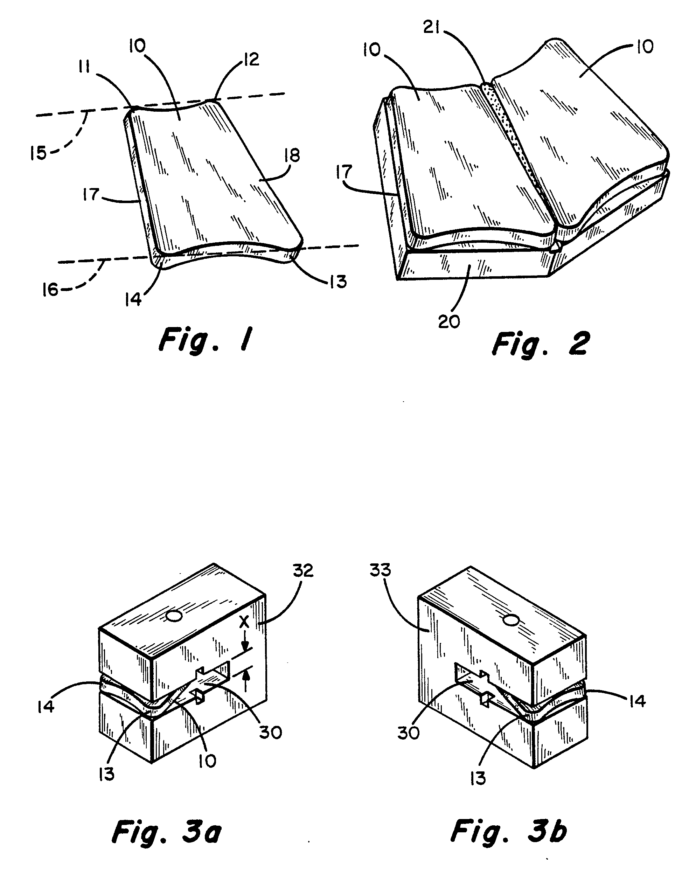

Referring first to Figure 1, there is shown a magnet 10 having a block form with a pair of substantially flat sides 17 (of which only an edge is shown), 18, thereby defining a uniform thickness to the block. The magnet 10 has a first pair of exterior corners 11,12 defining a line 15 intersecting or mutually tangential to the corners 11,12 and a second pair of corners 13,14 having a second line 16 intersecting or mutually tangential to the corners 13,14. The lines 15,16 are approximately parallel to each other in the plane of either side 17,18 of the magnet 10. The magnetisation is oriented such that the two flat surfaces 17,18 comprise the poles.

The magnet 10 may be made of any high flux generating, high remanence magnetic material. One preferred material, formed into the desired shape by sintering, is a recently developed compound comprising by weight approximately 27% neodymium, 1% boron, and 72% iron. Such material formed into a magnet, e.g. as shown in Figure 1 comprising a block approximately 0.25 in. (1 cm) thick with each side having an area of approximately 1.8 sq. in. (20.9 cm$^2$), produces an attractive force when the flux path is efficiently closed of approximately 70 lbs. (30 kg) on a flat steel surface. Such a magnet can generate 35 kilolines per sq. in. (5.4 kilolines per cm$^2$) or more of magnetic flux. Accordingly, it can be seen that these magnets can easily do substantial damage to any surface to which they are attracted, unless restrained. Any human body part such as a finger, which is caught between such a magnet and a metal surface to which it is attracted, can be severely injured if the magnet 10 is not restrained.

Figure 2 shows two of the magnets 10 of Figure 1 in a preferred position on a pole piece 20 for use in a particular type of disk drive actuator. The side 17 has a coating of a thermo-setting adhesive by which the magnets 10 are permanently attached to the pole piece 20. A thin coating of the adhesive is placed on sides 17,18 before the magnets 10 are positioned on the pole piece 20, and the attractive force of the magnets 10 is more than sufficient to hold them in proper position on the pole piece 20 given reasonably careful handling. After the magnets 10 have been positioned on the pole piece 20, the assembly is baked to cure or set the adhesive and mechanically attach the magnets 10 to the pole piece 20. A spacer 21 aids in defining the preferred position of the magnets 10 on the pole piece 20.

As m ntioned above, the magnets 10 are magnetised so that the sides 17,18 are the poles. They are oriented magnetically on the pole piece 20 so that the flat side 17 or 18 of one magnet 10 on the pole piece 20 having a north pole is co-planar with the side 18 or 17 of the other magnet having a south pole. Therefore, there is mutual magnetic attraction between the two magnets 10 carried on the pole piece 20 when assembled correctly. More to the point as far as the present invention is concerned, the magnets have mutual attraction for each other when still several centimetres apart because of the necessary magnetic orientation with respect to each other.

As mentioned earlier, handling these magnets requires great caution. Accordingly, it is preferred to carry them after they have been magnetised in keepers 32,33 shown in Figure 3 until they have been positioned on the pole piece 20. The keepers 32,33 comprise a rectangular prism and are made of a magnetically soft iron to which the magnets 10 are strongly attracted. Each keeper 32,33 has a slot 30 which is slightly wider than the thickness of the magnets 10 and which cuts entirely through the keepers 32,33 so as to intersect three sides thereof as shown. The slots 30 are of a size allowing the respective magnets 10 to be positioned within them in a preferred spatial orientation shown with the corners 13, 14 near the outside of the slot 30, and the corners 11,12 adjacent the bottom of the slot. The magnets 10 are positioned in their keepers 32,33 before they are magnetised, and are magnetised in the keepers. After magnetisation, the keepers conduct most of the flux from the magnets 10 through themselves and prevent these magnets from attracting themselves unexpectedly to ferrous surfaces. At the same time, the magnetic attraction between the keepers and their magnets is so strong that the magnets will typically not shift within their respective slots. This is a useful characteristic, since the orientation of the magnet 10 is important when attaching it to the pole piece 20 and, if the orientation of the magnet 10 is not easily changed in its keeper, a predetermined position of the keeper predetermines the position of the magnet as well.

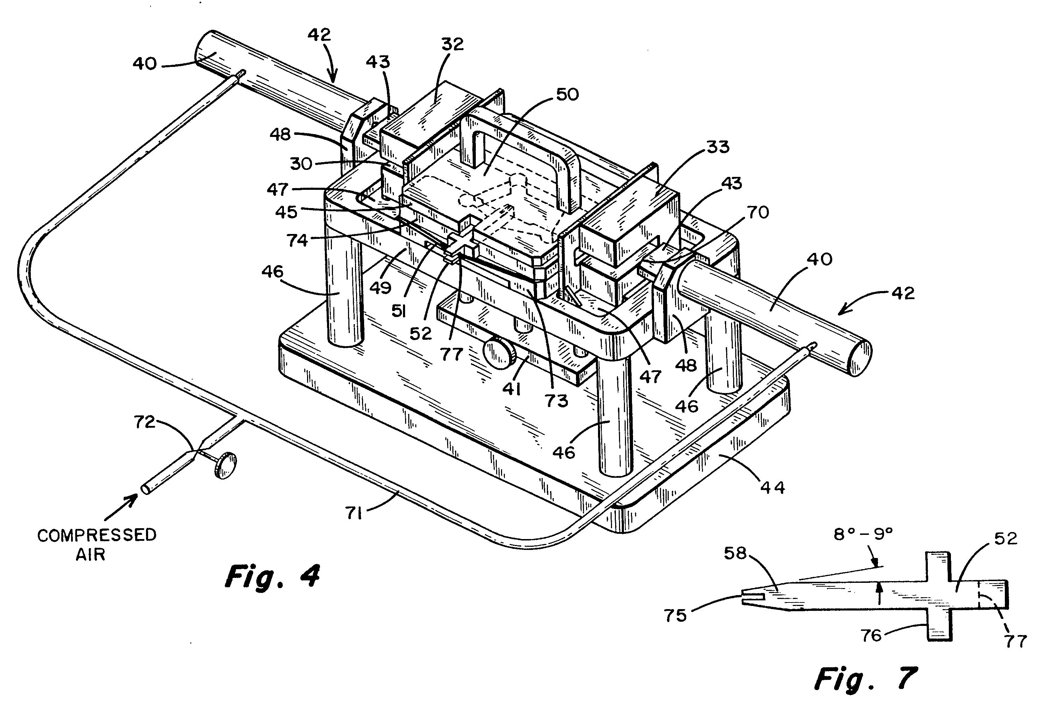

Figure 4 shows apparatus according to the present invention for positioning a pair of the magnets 10 on the pole piece 20 without running the risk of damage to the magnets or injury to personnel. The apparatus comprises a sub-base 44 carrying four posts 46 on which the remainder of the apparatus is supported. A base 49 is supported on the ends of the posts 46 in spaced apart relationship with the sub-base. The base 49 has a channel 50 in which the actual attachment of the magnets 10 to the pole piece 20 occurs.

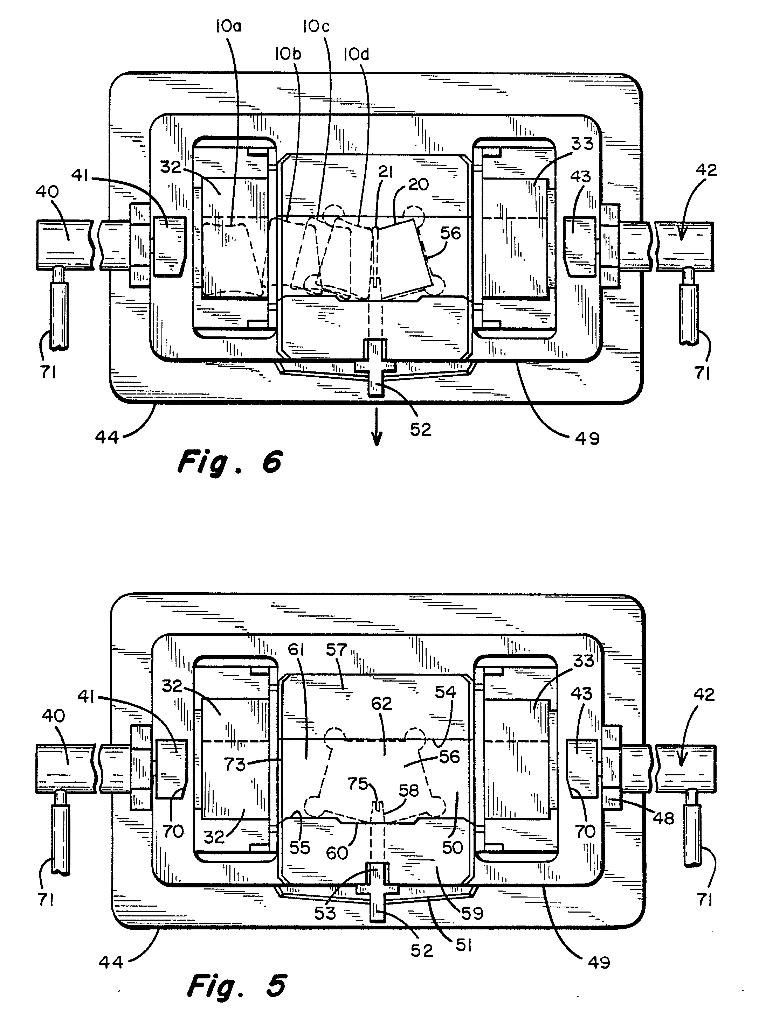

Two brackets 48 are attached to opposite sides of the base 49, which brackets support a pair of compressed air driven magnetic pushers 42, each of which has a cylinder-piston unit 40 and a non-magnetic anvil 43 at the operating end of the piston. Each anvil 43 has a small bevel 70 on its contact surface which can be seen better in Figures 5 and 6. The bevel is chosen to orient properly the magnets 10 as they exit their keepers 32,33. Each anvil 43 is approximately aligned with the channel 50 so that as each pusher 42 is actuated, the respective anvil 43 can enter the adjacent end of the channel 50.

The pushers 42 are actuated by compressed air supplied by a hose 71 and controlled by a valve 72. Opening the valve 72 causes the cylinder-piston units 40 to drive the anvils 43 towards each other simultaneously. A conventional spring in or double action capacity of the cylinder-piston units 40 returns the anvils 43 to their retracted position shown in Figure 4 when the valve 72 is closed.

Between the end of each anvil 43, when it is in its retracted position, as shown in Figure 4, there is a space in which one keeper 32 or 33 may be temporarily placed on a rest 47 with its slot 30 aligned with the adjacent retracted anvil 43. The height of each anvil 43 is less than the width of the slot 30 (dimension x in Figure 3), so that the anvil 43 may enter its adjacent slot 30 when the pusher 42 is actuated. The rests supporting the keepers 32,33 may be simply surfaces of the base 49.

Between the keepers 32,33 (when inserted on their respective rests on the base 49) and on the base 49 there is arranged a bed 73 on which there is a channel 50 whose bottom or floor 61 may be defined by the upper surface of the bed 73. It is probably helpful to refer to Figure 5 from time to time during this explanation to visualise better the arrangement of the channel 50 on the bed 73. The floor of the channel 50 is accurately aligned with and adjacent to the lower surface of each slot 30 in the keepers. The purpose of this is to provide a continuous path for a magnet 10 carried in one of the keepers 32 or 33 into the channel 50. The edges of the bed 73 also serve to prevent the keepers 32,33 from being moved by the pushers 42 when they are actuated.

One side wall of the channel 50 is defined by an edge 54 of a rear guide block 57: the other side wall is defined by an edge 55 of a front guide block 59. The guide blocks 57,59 may be integral with the bed 73, or may be removable and held in place on the bed 73 by pins or machine screws (not shown). It is preferred that the edge 55 of the front guide block 59 has a slight central depression or relief 60 which has the effect of widening the channel 50 slightly in its central length. The relief 60 is of an amount which allows the magnets 10 as they approach their positions to rotate slightly into the preferred angular positions.

There is in the floor 61 of the channel 50, midway from its ends, a recess 62 whose shape corresponds to that of the pole piece 20 such that the pole piece is held without the possibility of it translating or rotating in the plane of the floor 61, and yet allowing the pole piece to be easily inserted and removed from this recess 62. The bottom of the recess supports the pole piece so that the surface of the pole piece 20 to which the magnets 10 are to be fastened when in the recess 62, is approximately flush with or slightly below the floor 61 of the channel 50. The bottom of the recess 62 may simply be a part of the upper surface of the base 49. The bed 73 may be lifted by a lifter mechanism 41 (Figure 4), which presses upwards on the bottom surface of the bed 73 to make access to the magnetic assembly easy. An alternative to this is to remove the magnetic assembly from the top of the recess 62. Another alternative is to make the entire bottom of the recess 62 removable, so that the magnetic assembly may be removed through the bottom of the bed 73.

A magnet stop member 52 is located in the front guide block 59, and is adapted to slide from a first position, shown in Figures 4, 5 and 6 to a retracted position where its tip 58 is almost completely withdrawn from the channel 50. The magnets 10 are then free to attract themselves to a position as close to each other as the non-magnetic spacer 21 will allow. The magnet stop member 52 is normally held with its tip 58 protruding into the channel 50 by a spring 51 which has a relatively low deflection force allowing the tip 58 to be withdrawn easily from the channel 50. The tip 58 has a slot 75 aligned with the centre line of the magnet stop member 52 to accommodate the end of the non-magnetic spacer 21.

The magnet stop member 52 is shown in greater detail in Figure 7. It is preferably made of NYLON (Trade Mark) or some other low friction non-metallic material. The magnet stop member 52 has a cross piece 76 which allows the tip 58 to protrude only a preselected distance into the channel 50, thereby only partially closing it. The spring 51 fits into a slot 77 thereby to transmit its force to the magnet stop member 52 and urge its tip 58 fully into its preferred position in the channel 50.

It is also preferable that the tip 58 has a bevel on each side facing generally towards one end of the channel 50 so that the bevels on the tip 58 will be the contact points for the magnets 10 on the magnet stop member 52 as they near the end of their range of motion. If the bevel angle is chosen correctly for the material from which the magnet stop member 52, the front guide block 74 and the magnets 10 are made, as well as the weight and strength of the magnets 10, and the deflection force of the spring 51 is only a few ounces (tens of grammes), the force of the mutual attraction pressing the magnets 10 against the bevels will create a camming force on the magnet stop member 52 causing it to retract automatically and position the magnets 10 on the pole piece 20 in their predetermined spatial relationship. At the same time, the camming creates a smooth deceleration of the magnets 10 preventing damaging impact between the magnets. For the front guide block 59 and the magnet stop member 52 both are made of NYLON (Trade Mark) with smoothly finished rubbing surfaces and the magnets 10 as described in conjunction with Figure 1, a bevel angle of 8° to 9° from the centre line of the magnet stop member will assure that the latter will retract automatically from the channel 50 when the magnets 10 strike the bevels on its tip 58. All this occurs without any damage to the magnets 10.

To assure that the magnets track accurately in the channel 50, it is preferred to close the mouth of the channel 50 with a cover 45 which may merely rest on the guide blocks 57,59 with locating pins (not shown) preventing its lateral movement during use. The cover 45 can be thus easily removed to allow insertion of each pole piece 20.

One uses this apparatus to form a magnet assembly by initially placing a pole piece 20 in a recess 56, and placing the cover 45 in the position shown in Figure 4. Two magnet keepers 32,33 are placed with a magnetised magnet 10 positioned in each with its pair of corners 13,14 approximately aligned with the outside corners of the respective slot 30 as shown in Figure 3. The keepers 32,33 are positioned in the apparatus as shown in Figure 4 between the anvils 43 and the channel 50. The valve 72 is then opened and compressed air flows in the hose 71 to the cylinder-piston units 40, which causes the anvils 43 to press against the magnets 10 in their keepers 32,33. The magnets are forced out of the keepers 32,33 and into the channel 50 until they are sufficiently close to begin mutually attracting each other.

In Figure 6, outline 10a of the magnet 10 shows a first intermediate position of the magnet as it slides in the channel 50 towards the tip 58 of the magnet stop member 52. Outlines 10b, 10c show further intermediate positions of the magnet 10 in the slot as it slides towards the tip 58. Outline 10d shows a last intermediate position where the magnet 10 has contacted the tip 58 and the magnet stop member 52 is about to start sliding in the direction of the adjacent arrow to allow the magnet 10 to reach its final position. It should be realised that a second magnet 10 is being simultaneously pushed from the keeper 33 into the channel 50 so that the two magnets slide simultaneously towards the magnet stop member 52. It is quite important that the magnets arrive at the magnet stop member 52 at nearly the same time to prevent damage to it. This can be accomplished by using pushers 42 whose stroke velocities are identical. To accomplish this it is preferred to use double-acting cylinders for which speed can be controlled with a flow control valve in each exhaust chamber outlet of the pushers 42.

The attractive force between the two magnets when both press against the adjacent bevels on the tip 58 is sufficient to overcome the force of the spring 51 and cam the magnet stop member 52 into its retracted position with its tip 58 withdrawn from the channel 50. The natural resilience of the non-magnetic spacer 21 and magnet stop member 52 and the relatively gradual deceleration of the magnets 10 as they cam the magnet stop member 52 from the channel 50 serves to allow the magnets 10 to reach their predetermined positions on the pole piece 20 without excessive impact between them which may cause them to be damaged.

The width of the channel 50, i.e. the spacing between the edges 54,55 of the guide blocks 57,59 should be greater than the spacing between the lines 15,16 in Figure 1, but only slightly so, so that there is no possibility that the magnets 10 can rotate from approximately the desired angular orientation while sliding in the channel 50. The magnets, under the influence of correctly spaced edges 54,55, properly shaped relief 60 and the non-magnetic spacer 21, and properly designed magnet stop member 52, and the mutual attraction between the magnets, will consistently slide into their preferred orientation on the pole piece 20.

Once the magnets 10 have reached their desired position, the cover 45 can be removed and the lifter assembly 41 activated to allow access to the magnet assembly. At the same time, the pushers 42 are retracting the anvils 43 so that the keepers 32,33 can be replaced in the apparatus with others which have magnets in their slots 30. The lifter mechanism 41 is de-activated and a new pole piece is placed in the recess 62. The apparatus is then ready, with the replacement of the cover 45, to position another pair of magnets 10 on the new pole piece.

## Claims

1. Apparatus for positioning on a surface of a ferrous pole piece (20) in a predetermined spatial relationship, a pair of magnets (10) of the type having relatively powerful flux generation which, when the magnets are within a mutual attraction distance pulls them towards each other, each said magnet having two pairs of exterior corners (11,12;13,14), each pair of corners defining a line (15,16) intersecting them, the two lines so defined being approximately parallel to each other with a predetermined spacing from each other, said apparatus being characterised by comprising: a bed (73) having on it a channel (50) formed of a pair of opposed and facing interior walls (54,55) and a floor (61) between the walls, said walls being spaced from each other a distance sufficiently close to each other to permit only a predetermined amount of rotation of a magnet (10) within the channel in which each magnet can slide with each pair of corners (11,12;13,14) adjacent one interior wall, and a recess (62) centrally located in the floor (61) and adapted to receive the pole piece (20) with the surface of the pole piece on which the magnets are to be positioned approximately flush with the floor, said recess (62) being oriented to position the pole piece to create the predetermined spatial relationship between each magnet and the pole piece as the magnets slide towards each other in the channel and over the pole piece; a magnet pusher (42) at each end of the channel (50) for simultaneously sliding magnets (10) placed at the ends of the channel towards each other until magnetic attraction is felt between them and pulls them towards each other; and a stop (52) located in the channel (50) above the recess (62) and at least partially closing the channel, the arrangement being such that, in operation, by placing the magnets in the ends of the channel (50) and activating the pushers (42), the magnets are slid to within their mutual attraction distance and then, under the force of mutual attraction, slide further into contact with the stop (52) and the pole piece (20) and by inter-action between the magnets and the stop and channel walls, the magnets rotationally and translationally position themselves in the predetermined spatial relationship on the pole piece with the force of magnetic attraction between the magnets and the pole piece serving to maintain the magnets in the predetermined spatial relationship on the pole piece.

2. Apparatus as claimed in claim 1 characterised in that the stop (52) is formed of a non-magnetic material.

3. Apparatus as claimed in claim 1 or claim 2 characterised in that the stop (52) includes a slot (75) receiving a non-magnetic spacer (21) when the spacer is located in a pre-selected position on the pole piece between the magnets.

4. Apparatus as claimed in any preceding claim comprising a removable cover (45) enclosing the channel opening at the top.

5. Apparatus as claimed in any preceding claim characterised by including a ferrous magnet keeper (32,33) having a surface to which the magnet may be attached, and a rest (47) position between one of the magnet pushers and the adjacent end of the channel (50), said rest (47), in operation, supporting the keeper with its magnet in aligned relation with both the channel (50) and the pusher (42), whereby actuation of the pusher slides the magnet from the keeper into the channel.

6. Apparatus as claimed in claim 5 characterised in that the magnet keeper comprises a rectangular prism having a groove (30) in it from a first face to an opposite second face and intersecting a third face itself intersecting both the first and second faces, said groove having a width slightly greater than the thickness of a magnet, the rest (47) supporting the keeper with the groove in alignment with and between an end of the channel (50) and the adjacent pusher (42).

7. Apparatus as claimed in any preceding claim characterised in that the stop (52) protrudes into the channel (50) above and approximately centered on the recess (62) for the pole piece (20), so that, in operation, the magnets when sliding towards each other under the force of mutual attraction will strike the end of the stop within the channel when approximately in their preferred position.

8. Apparatus as claimed in claim 7 characterised in that the stop is slidably mounted in the bed (73) with an end which protrudes into the channel (50), said stop including a surface having a bevel facing generally towards an end of the channel, the stop further including a spring (51) urging the stop into the channel, whereby the force of the magnet when striking the end of the stop will create a camming action on the stop forcing its end out of the channel.

9. Apparatus as claimed in any preceding claim characterised in that the magnet pusher (42) includes an anvil (43) for contacting and transmitting the force for sliding the magnet. said anvil including a bevel (70) contacting the magnet for angularly orienting the magnet into a preferred angular position as it slides into the channel.

Fig. 1

Fig. 2

Fig. 3a

Fig. 3b

**Fig. 4**

COMPRESSED AIR

**Fig. 7**

8° - 9°

EP 0 300 594 A1

Fig. 6

Fig. 5

| | DOCUMENTS CONSIDERED TO BE RELEVANT | | EP 88304028.9 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | <u>EP - A2/A3 - 0 107 414</u> (FUJITSA)<br>. * Abstract; fig. 3 *<br>-- | 1 | H 01 F 7/02 |
| A | <u>GB - A - 2 107 934</u> (BRITISH STEEL CORP.)<br>* Abstract; fig. *<br>-- | 1 | |
| A | <u>DE - A1 - 3 526 852</u> (TDK)<br>* Abstract; fig. 2 *<br>-- | 1 | |
| A | <u>DE - A1 - 3 606 879</u> (MORITA)<br>Abstract *<br>---- | 1 | |
| | | | **TECHNICAL FIELDS SEARCHED (Int. Cl.4)** |
| | | | H 01 F 7/00<br>H 01 F 41/00 |

The present search report has been drawn up for all claims

| Place of search | Date of completion of the search | Examiner |
|---|---|---|
| VIENNA | 17-10-1988 | VAKIL |

EPO Form 1503 03 82

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document